# EUROPÄISCHE PATENTSCHRIFT

(11) **EP 3 170 288 B1**
(45) Veröffentlichungstag und Bekanntmachung des Hinweises auf die Patenterteilung: **15.12.2021**
(21) Anmeldenummer: 15756591.2
(22) Anmeldetag: 19.08.2015
(51) Int. Cl.: H04L 12/433, G06F 11/20, G06F 11/07, G06F 11/16

(54) **NETZKNOTEN, STEUERMODUL FÜR EINE KOMPONENTE UND ETHERNET RING**
NETWORK NODE, CONTROL MODULE FOR A COMPONENT AND ETHERNET RING
NOEUDS DE RÉSEAU, MODULE DE COMMANDE D'UN COMPOSANT ET ANNEAU ETHERNET

(30) Priorität: 18.09.2014 DE 102014218823
(43) Veröffentlichungstag der Anmeldung: 24.05.2017
(73) Patentinhaber: Siemens Aktiengesellschaft, 80333 München (DE)
(72) Erfinder: ZIRKLER, Andreas, 81735 München (DE)
(86) Internationale Anmeldenummer: PCT/EP2015/068992
(87) Internationale Veröffentlichungsnummer: WO 2016/041720

(56) Entgegenhaltungen:
- WO-A1-2013/186154
- DE-A1-102012 000 188
- US-B1- 6 233 702

## Beschreibung

Die Erfindung betrifft einen Netzknoten, ein Steuermodul für eine Komponente und einen Ethernet Ring.

Insbesondere im Zusammenhang mit autonomen Fahren haben redundante Systeme beispielsweise mit sogenanntem "fail operational" Verhalten eine große Bedeutung. Autonomes Fahren kommt sowohl für Elektrofahrzeuge, für Verbrennungsfahrzeuge als auch für Hybridfahrzeuge sowie für Sonderfahrzeuge, z.B. Flurförderfahrzeuge in Fertigungshallen, in Betracht. In der Luftfahrt sind fly-by-wire Systeme und Autopiloten bereits im Einsatz, jedoch sind die in der Luftfahrt verwendeten Systeme für die Anwendung in Automobilen zu teuer.

Auch in anderen Bereichen kommen redundante Systeme zum Einsatz, z.B. bei der Steuerung von Industrieanlagen, Kraftwerken, Bahnübergängen etc. Häufig wird aus Kostengründen darauf verzichtet, ein System "fail operational" zu gestalten, wenn ein sicherer Zustand eingenommen werden kann und damit ein sogenanntes "fail silent" Verhalten ausreichend ist. Ein Bahnübergang würde sich beispielweise im Fehlerfall schließen. Das System Bahnübergang wäre in diesem Beispiel sicher, würde aber nicht mehr funktionieren.

"Fail operational" Systeme sind in der Lage, im Falle eines beliebigen Einzelfehlers diesen zu erkennen, zu isolieren und noch weiterhin zu funktionieren, zumindest für eine bestimmte Zeit. Diese Zeit kann z.B. im Auto dazu genutzt werden, sicher den nächsten Parkplatz anzufahren, oder in einer Industrieanlage um die ausgefallenen Komponenten zu reparieren und damit einen unterbrechungsfreien Betrieb zu gewährleisten.

Fail operational Systeme müssen verwendet werden, wenn es keinen sicheren Zustand gibt, z.B. kann ein Fahrzeug nicht einfach auf der Autobahn stehen bleiben. Sie können verwendet werden, um die Verfügbarkeit eines Systems zu erhöhen. In diesem Fall müssen die Kosten für die fail operational Ausgestaltung den Kosten für einen möglichen Ausfall gegenüber gestellt werden.

Aus der DE 10 2012 000188 A1 ist ein Verfahren zum Betreiben eines Kommunikationsnetzwerkes, sowie eine Netzwerkanordnung bekannt, die durch Priorisierung bestimmter interner Datenkommunikation eine verbesserte Ausfallsicherheit, insbesondere bei so genannten "Babbling Idiots" Fehlertypen gewährleisten.

Aus der US 6,233,702 B1 ist ein Multiprozessorsystem bekannt, welches eine Anzahl von Subprozessorsystemen enthält, die jeweils im Wesentlichen identisch aufgebaut sind und jeweils eine Zentraleinheit (CPU) und mindestens eine Ein-/Ausgabeeinheit aufweisen, die durch einen Router miteinander verbunden sind, die auch die Subprozessorsysteme miteinander verbindet. Eine CPU irgendeines der Subprozessorsysteme kann über die Router mit irgendeiner Ein-/Ausgabeeinheit des Systems oder mit irgendeiner CPU des Systems kommunizieren.

Es ist Aufgabe der vorliegenden Erfindung eine Möglichkeit zu schaffen, eine hohe Ausfallsicherheit, insbesondere bei sogenannten fail operational Systemen, bei geringen Kosten anzugeben.

Diese Aufgabe wird durch die unabhängigen Ansprüche gelöst. Vorteilhafte Weitergestaltungen sind Gegenstand der abhängigen Ansprüche.

Ein entsprechender Netzknoten weist eine erste Recheneinheit und zumindest einer zweiten Recheneinheit. Weiterhin ist ein innerer Schalter und einem äußeren Schalter vorgesehen, wobei der innere Schalter mit der ersten Recheneinheit und der zumindest zweiten Recheneinheit verbunden ist. Weiterhin ist er mit dem äußeren Schalter verbunden. Der äußere Schalter weist zumindest einen Port für Daten, die von anderen Netzknoten stammen, auf.

Die Erfindung betrifft ferner ein Steuermodul zur Steuerung eines Aggregats sowie einen Ethernetring.

Weitere Ausgestaltungen und Vorteile der Erfindung werden anhand ausgewählter Ausführungsbeispiele erläutert, welche teilweise in Figuren dargestellt sind. Es zeigen:
- Figur 1:: eine Ausgestaltung eines Steuermoduls gemäß dem Stand der Technik und
- Figur 2:: eine beispielhafte Ausführung eines Steuermoduls gemäß der Erfindung.

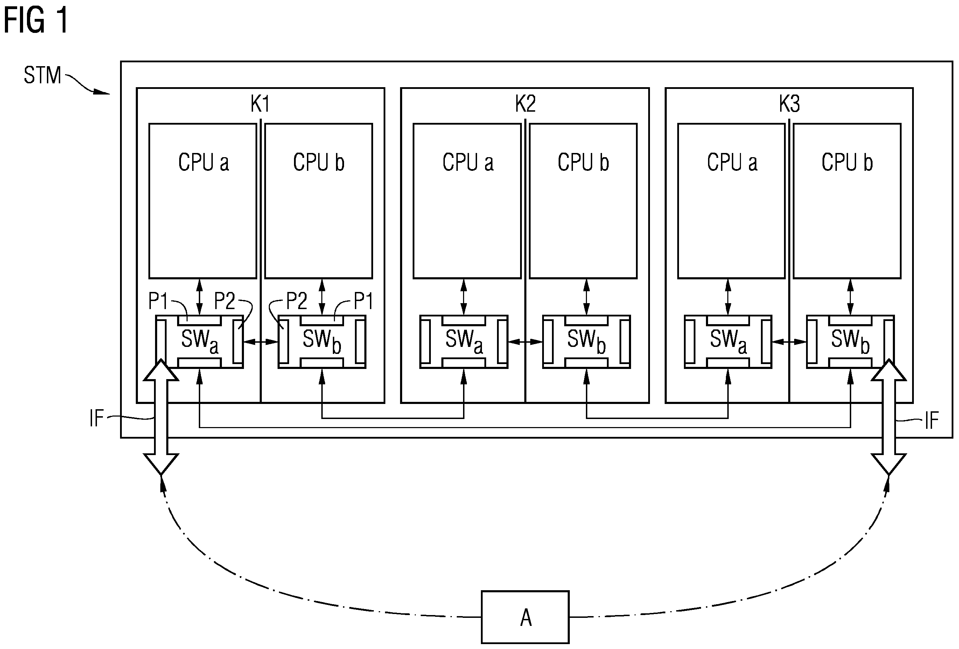

In Figur 1 ist ein Steuermodul STM abgebildet, welches mehrere Netzknoten, nämlich die Netzknoten oder Knoten 1, K1, Knoten 2, K2, und Knoten 3, K3 aufweist. Jeder der Knoten K1, K2, K3 ist als sogenannter Duplex Control-Computer (DCC) ausgestaltet. Das heißt, dass beispielsweise der Knoten K1 eine erste CPU bzw. (zentrale) Recheneinheit CPUₐ mit einem zugeordneten Schalter oder Switch Swₐ sowie eine zweite zentrale Recheneinheit CPU_{b} und einen dazugehörigen Schalter oder Switch Sw_{b} aufweist. Die beiden anderen dargestellten Knoten, der zweite Knoten K2 und der dritte Knoten K3 sind entsprechend ausgestaltet. Weiterhin weist das Steuermodul STM zumindest eine Schnittstelle IF auf, um eine Kommunikation mit zumindest einer zu steuernden Komponente bzw. Aggregat zu ermöglichen.

Das Steuermodul STM aus den drei Knoten K1, K2 und K3 soll "fail-operational" ausgelegt sein, d.h. im Falle der fehlerhaften Funktion zumindest einer Recheneinheit in einem der Knoten soll ein anderer Knoten diese Aufgabe übernehmen können. Fällt beispielsweise im Knoten K1 die Recheneinheit CPUₐ aus oder arbeitet fehlerhaft, so soll einer der beiden anderen Knoten K2 oder K3 diese Aufgabe übernehmen können.

Die Feststellung, ob ein Knoten fehlerhaft arbeitet, wird wie im Folgenden ausgeführt getroffen: Ziel ist es, dass das Steuermodul STM über die Schnittstelle IF einen korrekten Steuerbefehl für ein Aggregat, d. h. also einen Sensor oder einen Aktor herausgibt.

Dazu berechnet die erste Recheneinheit CPUₐ und die zweite Recheneinheit CPU_{b} in dem Knoten, welchem diese Aufgabe primär zugeordnet ist, die dazu notwendigen Operationen. Es erfolgt also eine getrennte Berechnung. Die Daten, welche in der ersten Recheneinheit CPUₐ berechnet wurden, werden an einen dieser Recheneinheit zugeordneten Switch Swₐ übertragen, also über einen ersten Port P1 an den Switch Swₐ übergeben.

Die zweite im Knoten K1 befindliche Recheneinheit CPU_{b} berechnet ebenfalls die für den jeweiligen Steuerbefehl erforderlichen Daten und reicht diese über den Port P1 des zugeordneten zweiten Schalters bzw. Switch Sw_{b} an diesen. Über einen weiteren Port P2 an dem der zweiten Recheneinheit CPU_{b} zugeordneten Switch Sw_{b} bzw. dem der ersten Recheneinheit CPUₐ zugeordneten Switch Swₐ können die Daten zwischen den beiden Recheneinheiten CPUₐ und CPU_{b} ausgetauscht und konsolidiert werden. Wird nun festgestellt, dass die Ergebnisse voneinander abweichen, so hat zumindest eine der beiden Recheneinheiten CPUₐ oder CPU_{b} oder einer der beiden Switches Swₐ oder Sw_{b} nicht korrekt gearbeitet. Um eine Fehlfunktion auszuschließen, wird daher der gesamte erste Knoten K1 abgeschaltet und einer der beiden anderen Knoten, der zweite Knoten K2 oder der dritte Knoten K3 übernimmt die Aufgaben des ersten Knoten K1. Der erste Knoten K1 arbeitet also nach dem sogenannten "fail silent" Prinzip, d.h. sobald der Verdacht auf eine nicht korrekte Funktionsweise vorliegt, schaltet sich dieser Knoten selbständig ab.

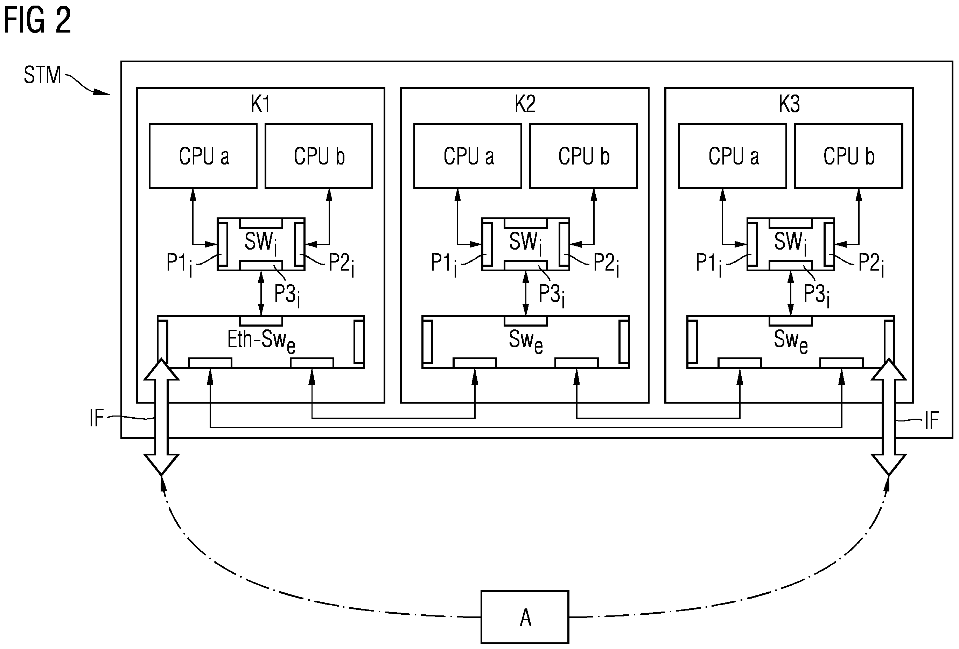

In Figur 2 ist nun schematisch eine Ausgestaltung der Erfindung dargestellt, bei der das Steuermodul STM für ein Aggregat drei Knoten, einen ersten Knoten K1, einen zweiten Knoten K2 und einen dritten Knoten K3 aufweist.

Alternativ kann eine andere Anzahl von Knoten ≥ 2 vorgesehen sein.

Das Aggregat kann ein Sensor, ein Aktor oder eine Kombination aus beiden sein. Im Folgenden werden, nicht abschließend, einige Beispiele für Sensoren und Aktoren aufgeführt: Beispiele für Sensoren sind Lenkwinkelsensoren, Raddrehzalsensoren, Beschleunigungssensoren oder komplexe, Radar-, Lidar-, Kamera- oder Ultraschallbasierte Umgebungssensoren in Fahrzeugen, Zug-Annäherungssensoren am Bahnübergang oder Druck-, Temperatur- und Durchflusssensoren in Industrieanlagen. Aktoren im Fahrzeug sind beispielsweise Lenkwinkelsteller, Bremskraftsteller, Antriebsmotoren. In Industrieanlagen können Aktoren durch Ventile, Antriebe, Pumpen gebildet sein, bei einem Bahnübergang durch die Schranken.

Für einen Steuerbefehl, welcher über eine Schnittstelle IF an ein Aggregat gesendet wird, erfolgt wiederum die Berechnung über die erste Recheneinheit CPUₐ und die zweite Recheneinheit CPU_{b} voneinander. Diese reichen das ermittelte Ergebnis an einen inneren Schalter oder Switch Swᵢ weiter. In der in Figur 2 gezeigten Realisierung ist die CPUₐ über einen ersten Port P1ᵢ mit dem inneren Schalter Swᵢ verbunden, die CPU_{b} über einen zweiten Port P2ᵢ. Eine Verbindung des inneren Schalters Swᵢ zu einem äußeren Schalter Swₑ ist über einen dritten Port P3ᵢ herstellbar.

Ein Port kann insbesondere als Ein/Ausgang ausgestaltet sein. Es wird also unter Port insbesondere eine Schnittstelle einer Netzwerkkomponente wie eines Switch verstanden, welche beispielsweise über eine Portadresse angesprochen werden kann. Alternativ kann ein Port nur als Eingang oder nur als Ausgang ausgestaltet sein.

Über den inneren Switch Swᵢ gelangen nur Pakete, die von einer Recheneinheit an die jeweils andere Recheneinheit innerhalb eines Knotens gerichtet sind, den sogenannten "X-lane traffic", oder aber Pakete, die vom ersten Knoten K1 stammen, d.h. dieser die Datenquelle ist, oder an diesen als Ziel gerichtet sind, d.h. dieser die Datensenke ist.

Im ersten Fall geschieht dies ausschließlich über den ersten Port P1ᵢ und den zweiten Port P2ᵢ. Im zweiten Fall werden die Datenpakete vom äußeren Switch Swₑ an den inneren Switch Swᵢ bzw. vom inneren Switch Swᵢ an den äußeren Switch Swₑ über den Port P3ᵢ weitergereicht.

Datenpakete, welche lediglich weitergereicht werden, erreichen den inneren Switch Swᵢ nicht.

Wird nun eine Abweichung festgestellt, so schaltet sich wiederum der betreffende Knoten, in dem eine Abweichung der Ergebnisse der beiden Recheneinheiten innerhalb des Knotens voneinander detektiert wurde, ab.

Aus diesem Grund wird versucht zu vermeiden, dass von außen kommende Datenpakete die Kommunikation zwischen der Recheneinheit CPUₐ und der Recheneinheit CPU_{b} stören können. Würde dies passieren, z.B. weil ein defekter Knoten oder ein defektes Aggregat eine große Menge an Daten mit falschen Header-Attributen verschickt, könnte dieser eine defekte Knoten dazu führen, dass sich mehrere Duplex-Control Computer DCC abschalten. Ein fail operational Verhalten wäre in diesem Fall dann nicht mehr gegeben.

Datenpakete, die lediglich von einem Knoten weitergereicht werden, laufen über den äußeren Schalter bzw. Switch Swₑ. Dieser weist Ports bzw. Ein/Ausgänge auf, um eine Kommunikation mit weiteren Knoten des Netzwerkes zu ermöglichen. Optional weist der Knoten eine Schnittstelle IF auf um eine Kommunikation mit zumindest einem Aggregat zu ermöglichen. Diese Schnittstelle IF kann insbesondere über einen Port des äußeren Switches Swₑ realisiert sein.

Die Vorteile der vorgeschlagenen Architektur liegen in folgenden Punkten:
1. Wird ein Datenpaket von einem Knoten zum anderen Knoten weitergereicht, beispielsweise vom ersten Knoten K1 zum dritten Knoten K3, so müssen innerhalb von jedem Knoten zwei Übertragungen bzw. hops stattfinden, nämlich vom der ersten Recheneinheit zugeordneten Switch Swₐ zum der zweiten Recheneinheit zugeordneten Switch Sw_{b}, bevor das Datenpaket an den nächsten Knoten weitergereicht wird. Diese Erhöhung hat negative Auswirkungen auf die Ausfallwahrscheinlichkeit, weil ja bei jeder Übertragung ein Fehler auftreten kann, sowie auf eine bei der Übertragung auftretende Zeitverzögerung. Ist nun auch das zu steuernde Aggregat mit einem Duplex-Control-Computer DCC ausgestattet, so wird dieser Nachteil mit der Anzahl der Aggregate multipliziert, da ja auch im Duplex-Control Computer DCC des Aggregats jeweils zwei Übertragungen bzw. Hops stattfinden.

In der in Figur 2 gezeigten Ausgestaltung sind die beiden Schalter SW_{a,b} jeweils einer Recheneinheit CPU_{a,b} zugeordnet. Dies ermöglicht, den Aufbau eines Knotens aus zwei identischen "Lane-Modulen", die jeweils unter anderem eine Recheneinheit und einen Schalter beinhalten. In einem sogenannten "Lane-Modul" bzw. "Weg-Modul" sind beispielsweise unterschiedliche Wege für die zu berechnenden Daten durch den Knoten vorgesehen, in der gezeigten Ausgestaltung durch zwei Recheneinheiten. Eine Ausführung mit identischen Lane -Modulen ist insbesondere bei kleineren Stückzahlen vorteilhaft, da die Entwicklungskosten für einen Knoten gering gehalten werden können, da nur ein Lane-Modul entwickelt werden muss.

In einer anderen Ausgestaltung sind der der Recheneinheit CPUₐ zugeordnete Switch Swₐ und der der Recheneinheit CPU_{b} zugeordnete Switch Sw_{b} funktional als ein Switch ausgestaltet, der beiden Recheneinheiten zugeordnet ist. Der Port P2ᵢ würde in diesem Fall entfallen beziehungsweise durch eine interne Verbindung im Switch ersetzt. Für größere Stückzahlen wäre die Realisierung mit nur einem Switch vorteilhaft. Den höheren Entwicklungskosten für die aufwändigere Platine und den komplexeren, mit mehr Ports ausgestatteten Schalter, würden geringere Stückkosten gegenüberstehen.

In einer weiteren Ausgestaltung dagegen werden nicht von einem Datenknoten her stammende und nicht an diesen als Ziel gerichtete Datenpakete lediglich über den äußeren Switch Swₑ weitergereicht, so dass innerhalb eines Knotens nur ein hop für weitergereichte Datenpakete auftritt.

Dies hat neben dem oben beschriebenen Vorteil bei der alternativen Realisierung mit einem einzigen Switch zusätzlich noch den Vorteil, dass kein komplexer Schalter bzw. Switch verwendet werden muss, der möglicherweise nicht in geeigneter Ausführung als Massenprodukt erhältlich ist.

2. Ein weiterer Vorteil liegt darin, dass weitgehend handelsübliche Schalter bzw. Switches verwendet werden können, da keine Portpriorisierung erforderlich ist. Dadurch können auf dem Markt verfügbare Schalter, d.h. nicht speziell für die Anwendung konzipierte Schalter verwendet werden. Dies beeinflusst die Verfügbarkeit und den Preis positiv. Auch sind gerade im Automobilbereich verwendbare Switches, bei denen Aspekte wie ein breiter Arbeits-Temperaturbereich, Stromverbrauch und auch Preis eine Rolle spielen, nur mit relativ geringer Port Anzahl erhältlich. Ein weiterer Aspekt ist, dass wenige dieser Switches eine Unterstützung für zeitsensitive Netzwerke TSN (time sensitive networks), wie sie beispielsweise in IEEE 802.1Qbu oder IEEE 802.1Qbv spezifiziert sind, bieten, d.h. eine Unterstützung für zeitsensitive Netzwerke, bei der beispielsweise lange, niedrigpriore Datenpakete für hochpriore kurze Datenpakete unterbrochen werden können.

Das Problem des Portpriorisierung soll wiederum in Zusammenhang mit Figur 1 erläutert werden:
Würde beispielsweise der dritte Knoten K3 fehlerhaft arbeiten und eine Vielzahl von fehlerhaften Paketen an den ersten Knoten K1 senden, so hätte der erste Knoten K1 keine Möglichkeit, intern von seinen beiden Recheneinheiten stammende Datenpakete, welche verglichen werden müssen, den externen Datenpaketen vom Knoten 3 zu bevorzugen, falls die fehlerhaften Pakete von K3 im Header die gleiche Priorisierungs-Information trägt. Um diese Fehlerquelle auszuschalten, müssen beide Knoten eine portbasierte Priorisierung bzw. Portpriorisierung unterstützen, d.h. die Pakete abhängig davon priorisieren, an welchem Port sie empfangen wurden.

Dagegen ist dies bei dem in Figur 2 gezeigtem Aufbau nicht erforderlich: Da hier die Überkreuz- bzw. X-Lane-Daten bzw. der X-Lane Traffic, also Daten, die zwischen den beiden Recheneinheiten innerhalb eines Knotens ausgetauscht werden, nur über den inneren Switch Swᵢ kommuniziert werden, kann für diese Daten ein sogenannter Ethertype, eine VLAN-ID und/oder eine VLAN-Priorität verwendet werden.

Die Ports, die den inneren Schalter Swᵢ mit dem äußeren Schalter Swₑ verbinden können jetzt so konfiguriert werden, dass X-Lane Daten nicht weitergeleitet werden. Es findet also kein Austausch von Datenpaketen zwischen dem inneren Schalter Swᵢ und dem äußeren Schalter Swₐ statt, wenn die Datenpakete ein entsprechendes Attribut aufweisen, das für Datenpakete reserviert ist, welche von einer Recheneinheit im Knoten an die andere Recheneinheit gerichtet sind. Bei den Attributen handelt es sich insbesondere um sogenannten im Datenkopf bzw. "Header" befindliche Header Attribute wie beispielsweise "VLAN-tags" oder "Ethertypes". Es können auch mehrere Verbindungen zwischen innerem Schalter und Swᵢ und äußerem Schalter Swₐ vorgesehen sein. Zur Verhinderung eines Datenaustauschs wird vorteilhafterweise sichergestellt, dass an jeder Verbindung zumindest entweder der entsprechende innere Schalter Swᵢ kein von einer Recheneinheit an die andere gerichtetes Datenpaket weitergibt oder der entsprechende äußere Schalter Swₐ dieses zurückweist. Zur Erhöhung der Sicherheit kann es auch vorgesehen sein, dass sowohl innerer Switch Swᵢ als auch äußerer Switch Swₐ entsprechend konfiguriert sind.

Zusätzlich kann der von außen in den Switch Swᵢ eindringende Datenverkehr mit einfachen Standard-Maßnahmen begrenzt werden. Damit kann sichergestellt werden, dass an einer Recheneinheit CPU_{a,b} niemals durch einen externen Fehler verursacht so viele, fehlerhafte Datenpakete ankommen, dass die X-Lane Daten aufgrund von Ressourcenengpässen wie beispielsweise Puffergröße oder Rechenzeit, nicht mehr bearbeitet werden können. Damit kann der X-Lane Traffic sicher über alle anderen Datenklassen bzw. Traffic Classes priorisiert werden, ohne dass einer der Schalter bzw. Switches eine portbasierte Priorisierung unterstützen muss. Dazu kann der äußerere Schalter Swₐ so konfiguriert sein, dass Datenpakete nur bis zum Erreichen einer vorgegebenen Datenrate weitergereicht werden an den inneren Schalter Swᵢ. Alternativ oder zusätzlich kann der innere Schalter Swᵢ so konfiguriert sein, dass er vom äußeren Schalter Swₐ stammende Pakete bei Überschreiten der vorgegebenen Datenrate abweist. Die vorgegebene Datenrate ist so bemessen, dass der Datenverkehr zwischen den CPUs nicht oder nicht wesentlich beeinträchtigt wird, was unter anderem von der vorhandenen Rechenleistung und der Größe der Datenpuffer im Switch oder/und der Recheneinheit abhängt. Eine nur unwesentliche Beeinträchtigung liegt vor, wenn der Datenaustausch noch in einer vorgegebenen Bandbreite und innerhalb einer vorgegebenen Verzögerung realisiert werden kann.

Bei mehreren Verbindungen zwischen innerem Schalter Swᵢ und äußerem Schalter Swₐ wird vorteilhafterweise bei jeder Verbindung zumindest ein Schalter so konfiguriert, dass der Datenverkehr begrenzt werden kann.

Das ermöglicht die Verwendung von handelsüblichen und insbesondere im Vergleich zu FPGAs (Field Programmable Gate Array) kostengünstigen Schaltern. In der Architektur gemäß Figur 1 wäre eine Priorisierung durch Kennzeichnungen bzw. Tags oder sonstige, dem Datenrahmen anhaftende Kennungen bzw. Identifier nicht ausreichend, da nicht ausgeschlossen werden kann, dass ein fehlerhaft arbeitender Knoten, beispielsweise der Knoten K3 Datenrahmen mit diesem Tag erzeugt.

In der Architektur gemäß Figur 2 würden Datenrahmen mit diesen Tags sowohl am Sende- als auch am Empfangsport den inneren Schalter Swᵢ und den äußeren Schalter Swₑ verbindenden Leitung oder Link verworfen, sodass sie den X-Lane Traffic nicht stören könnten. Daten, die von Außen empfangen werden müssen, können an demselben Link in ihrer Bandbreite begrenzt werden, sodass sie nicht den X-Lane Traffic durch Überlastung der Empfangspuffer oder der CPU stören können.

Alternativ kann eine Zahl größer gleich zwei von Recheneinheiten innerhalb eines Knotens vorgesehen sein, welche über einen oder mehrere innere Schalter bzw. Switches Swᵢ kommunizieren können. Damit kann beispielsweise die Wahrscheinlichkeit, dass ein Knoten abgeschaltet wird verringert werden, wenn eine Mehrheitsentscheidung getroffen wird, d.h. ein Rechenergebnis als korrekt anerkannt wird, sobald mindestens zwei Knoten dasselbe Ergebnis aufweisen.

Weiterhin können mehrere Schnittstellen IF vorgesehen sein um mit einem Aggregat auf unterschiedliche Weise zu kommunizieren oder/und mit mehreren Aggregaten zu kommunizieren.

Ein Ethernet Ring kann insbesondere durch ein Steuermodul gebildet werden, welches zwei oder mehr Knoten aufweist. Dabei kann eine Schnittestelle zum jeweiligen Aggregat bei einem oder mehreren Knoten vorgesehen sein. Die Kommunikation zu unterschiedlichen Aggregaten kann über unterschiedliche oder dieselben Schnittstellen laufen.

## Patentansprüche

1. Netzknoten (K1, K2, K3)
- mit einer ersten Recheneinheit (CPUₐ) und zumindest einer zweiten Recheneinheit (CPU_{b}),
- einem inneren Schalter (Swᵢ) und einem äußeren Schalter (Swₑ), wobei der innere Schalter (Swᵢ) mit der ersten Recheneinheit (CPUₐ) und der zumindest zweiten Recheneinheit (CPU_{b}) derart verbunden ist sowie mit dem äußeren Schalter (Swₑ) derart verbunden ist, dass den inneren Schalter nur erste Daten erreichen, wenn der Netzknoten entweder Datensenke oder Datenquelle der ersten Daten ist oder Datensenke und Datenquelle der ersten Daten ist und zweite Daten die über den Netzknoten weitergeleitet werden nur den äußeren Schalter erreichen, und
- wobei der äußere Schalter (Swₑ) zumindest einen Port für die zweiten, von anderen Netzknoten stammenden, Daten aufweist.

2. Netzknoten (K1, K2, K3) nach Anspruch 1 mit zumindest einer Schnittstelle (IF) zum Ausgeben von Steuerbefehlen an ein Aggregat (A).

3. Netzknoten (K1, K2, K3) nach Anspruch 2, bei dem die Schnittstelle (IF) zum Ausgeben von Steuerbefehlen an ein Aggregat (A) als ein Port des äußeren Schalters (Swe) ausgestaltet ist.

4. Netzknoten (K1, K2, K3) nach einem der vorhergegangenen Ansprüche, bei dem der innere Schalter (Swᵢ) derart ausgestaltet ist, dass Daten von zumindest einer Recheneinheit (CPU₂, CPU_{b}) über zumindest einen Port (P1ᵢ , P2ᵢ) des inneren Schalters (Swᵢ) an diesen übergeben werden und über zumindest einen anderen Port (P3ᵢ) des inneren Schalters (Swᵢ) an den äußeren Schalter (Swₐ) übergeben werden.

5. Netzknoten (K1, K2, K3) nach einem der vorhergegangenen Ansprüche, bei dem beim äußeren Schalter (Swₐ) zumindest ein Port für die Kommunikation zu jeweils einem Knoten vorgesehen ist.

6. Netzknoten (K1, K2, K3) nach einem der vorhergegangenen Ansprüche, bei dem die erste Recheneinheit (CPUₐ) und die zumindest zweite Recheneinheit (CPU_{b}) Rechenoperationen durchführen und sich der Netzknoten abschaltet, wenn die Ergebnisse dieser Rechenoperationen abweichen.

7. Netzknoten (K1, K2, K3) nach einem der vorhergegangenen Ansprüche, bei dem zumindest ein Port am inneren Schalter (SWᵢ) an der Verbindung, die den inneren Schalter (Swᵢ) mit dem äußeren Schalter (Swₑ) verbindet, so konfiguriert ist, dass Pakete, die mit einem Attribut gekennzeichnet sind, das für Pakete reserviert ist, die Daten von der ersten Recheneinheit (CPUₐ) zur zweiten Recheneinheit (CPU_{b}) transportieren, nicht von dem Port am inneren Schalter (Swᵢ) an den zumindest einen äußeren Schalter (Swₐ) weitergegeben werden.

8. Netzknoten (K1, K2, K3) nach einem der vorhergegangenen Ansprüche, bei dem zumindest ein Port am äußeren Schalter (Swₐ) an der Verbindung, die den inneren Schalter (Swi) mit dem äußeren Schalter (Swₐ) verbindet, so konfiguriert ist, dass Pakete, die mit einem Attribut gekennzeichnet sind, das für Pakete reserviert ist, die Daten von der ersten Recheneinheit (CPUₐ) zur zweiten Recheneinheit (CPU_{b}) transportieren, von dem zumindest einen äußeren Schalter (Swₐ) abgewiesen werden.

9. Netzknoten (K1, K2, K3) nach einem der vorhergegangenen Ansprüche, bei dem zumindest ein Port am äußeren Schalter (Swₐ) so konfiguriert ist, dass eine Datenrate die an den inneren Schalter (Swᵢ) weitergereicht wird, begrenzt ist auf eine vorgegebene Datenrate.

10. Netzknoten (K1, K2, K3) nach einem der vorhergegangenen Ansprüche, bei dem zumindest ein Port am inneren Schalter (Swᵢ) derart konfiguriert ist, dass bei einer Überschreitung einer vorgegebenen Datenrate, Datenpakete von einem Port am äußeren Schalter (Swₐ) abgewiesen werden.

11. Netzknoten (K1, K2, K3) nach Anspruch 9 oder 10, bei dem die vorgegebene Datenrate von der vorhandenen Rechenzeit und Puffergröße so abhängt, dass ein Datenaustausch zwischen der ersten Recheneinheit (CPUₐ) und der zweiten Recheneinheit (CPU_{b}) nicht beeinträchtigt wird.

12. Steuermodul (STM) für zumindest eine Komponente, welches zumindest einen ersten Netzknoten (K1) und zumindest einen zweiten Netzknoten (K2) aufweist gemäß den vorhergegangenen Ansprüchen mit einer Schnittstelle (IF) zum Ausgeben von Steuerdaten und zum Empfang von Daten einer zu steuernden Komponente (A), bei dem wenn sich ein Netzknoten (K1, K2, K3) abschaltet, ein anderer Knoten (K1, K2, K3) die Aufgaben dieses Netzknotens (K1, K2, K3) übernimmt.

13. Ethernet-Ring mit zumindest zwei Netzknoten gemäß den vorhergegangenen Ansprüchen 1 bis 11, welche ein Steuermodul bilden und einer damit verbundenen, durch das Steuermodul (STM) zu steuernden Komponente (A).

14. Ethernet-Ring mit drei Netzknoten (K1, K2, K3) gemäß den vorhergehenden Ansprüchen 1 bis 11, welche ein Steuermodul (STM) bilden wobei zwei Netzknoten (K1, K3) eine Schnittstelle zur Kommunikation mit der Komponente (A) aufweisen.

## Claims

1. Network node (K1, K2, K3)
- having a first computing unit (CPUₐ) and at least one second computing unit (CPU_{b}),
- an internal switch (Swᵢ) and an external switch (Swₑ), the internal switch (Swᵢ) being connected to the first computing unit (CPUₐ) and to the at least second computing unit (CPU_{b}) and to the external switch (Swₑ) in such a manner that only first data reach the internal switch if the network node is either the data sink or data source of the first data or the data sink and data source of the first data, and second data which are forwarded via the network node only reach the external switch, and
- the external switch (Swₑ) having at least one port for the second data which come from other network nodes.

2. Network node (K1, K2, K3) according to Claim 1, having at least one interface (IF) for outputting control commands to an assembly (A).

3. Network node (K1, K2, K3) according to Claim 2, in which the interface (IF) for outputting control commands to an assembly (A) is in the form of a port of the external switch (Swₑ).

4. Network node (K1, K2, K3) according to one of the preceding claims, in which the internal switch (Swᵢ) is configured in such a manner that data from at least one computing unit (CPUₐ, CPU_{b}) are transferred to the internal switch (Swᵢ) via at least one port (P1ᵢ, P2ᵢ) of said switch and are transferred to the external switch (Swₐ) via at least one other port (P3ᵢ) of the internal switch (Swᵢ).

5. Network node (K1, K2, K3) according to one of the preceding claims, in which at least one port for communicating with a respective node is provided in the external switch (Swₐ) .

6. Network node (K1, K2, K3) according to one of the preceding claims, in which the first computing unit (CPUₐ) and the at least second computing unit (CPU_{b}) carry out computing operations, and the network node switches off if the results of these computing operations differ.

7. Network node (K1, K2, K3) according to one of the preceding claims, in which at least one port on the internal switch (Swᵢ) is configured, at the connection which connects the internal switch (Swᵢ) to the external switch (Swₑ), in such a manner that packets which are identified with an attribute which is reserved for packets transporting data from the first computing unit (CPUₐ) to the second computing unit (CPU_{b}) are not forwarded from the port on the internal switch (Swᵢ) to the at least one external switch (Swₐ).

8. Network node (K1, K2, K3) according to one of the preceding claims, in which at least one port on the external switch (Swₐ) is configured, at the connection which connects the internal switch (Swᵢ) to the external switch (Swₐ), in such a manner that packets which are identified with an attribute which is reserved for packets transporting data from the first computing unit (CPUₐ) to the second computing unit (CPU_{b}) are rejected by the at least one external switch (Swₐ).

9. Network node (K1, K2, K3) according to one of the preceding claims, in which at least one port on the external switch (Swₐ) is configured in such a manner that a data rate which is forwarded to the internal switch (Swᵢ) is limited to a predefined data rate.

10. Network node (K1, K2, K3) according to one of the preceding claims, in which at least one port on the internal switch (Swᵢ) is configured in such a manner that data packets from a port on the external switch (Swₐ) are rejected if a predefined data rate is exceeded.

11. Network node (K1, K2, K3) according to Claim 9 or 10, in which the predefined data rate depends on the available computing time and buffer size such that data interchange between the first computing unit (CPUₐ) and the second computing unit (CPU_{b}) is not impaired.

12. Control module (STM) for at least one component, which control module has at least one first node (K1) and at least one second node (K2) according to the preceding claims, with an interface (IF) for outputting control data and for receiving data relating to a component (A) to be controlled, in which, if a network node (K1, K2, K3) switches off, another node (K1, K2, K3) undertakes the tasks of this network node (K1, K2, K3).

13. Ethernet ring having at least two network nodes according to the preceding Claims 1 to 11, which form a control module, and a component (A) which is connected thereto and is to be controlled by the control module (STM).

14. Ethernet ring having three network nodes (K1, K2, K3) according to the preceding Claims 1 to 11, which form a control module (STM), two network nodes (K1, K3) having an interface for communicating with the component (A).

## Revendications

1. Nœud de réseau (K1, K2, K3)
- comportant une première unité de calcul (CPUₐ) et au moins une seconde unité de calcul (CPU_{b}),
- un commutateur interne (Swᵢ) et un commutateur externe (Swₑ), le commutateur interne (Swᵢ) étant connecté à la première unité de calcul (CPUₐ) et à l'au moins une seconde unité de calcul (CPU_{b}) ainsi qu'au commutateur externe (Swₑ) de sorte que des premières données n'atteignent le commutateur interne que si le nœud de réseau est soit un puits de données soit une source de données des premières données, ou est un puits de données et une source de données des premières données et des secondes données qui sont transmises par l'intermédiaire du nœud de réseau n'atteignent que le commutateur externe, et
- le commutateur externe (Swₑ) présentant au moins un port pour les secondes données provenant d'autres nœuds de réseau.

2. Nœud de réseau (K1, K2, K3) selon la revendication 1, comportant au moins une interface (IF) servant à émettre des instructions de commande vers un ensemble (A).

3. Nœud de réseau (K1, K2, K3) selon la revendication 2, dans lequel l'interface (IF) servant à émettre des instructions de commande vers un ensemble (A) est conçue comme un port du commutateur externe (Swₑ).

4. Nœud de réseau (K1, K2, K3) selon l'une des revendications précédentes, dans lequel le commutateur interne (Swᵢ) est conçu de sorte que les données d'au moins une unité de calcul (CPUₐ, CPU_{b}) sont transférées au commutateur interne (Swᵢ) par l'intermédiaire d'au moins un port (P1ᵢ, P2ᵢ) de celui-ci et sont transférées au commutateur externe (SWₐ) par l'intermédiaire d'au moins un autre port (P3ᵢ) du commutateur interne (Swᵢ) .

5. Nœud de réseau (K1, K2, K3) selon l'une des revendications précédentes, dans lequel au moins un port pour la communication avec respectivement un nœud est prévu au niveau du commutateur externe (Swₐ).

6. Nœud de réseau (K1, K2, K3) selon l'une des revendications précédentes, dans lequel la première unité de calcul (CPUₐ) et l'au moins une seconde unité de calcul (CPU_{b}) effectuent des opérations arithmétiques et le nœud de réseau se désactive si les résultats de ces opérations arithmétiques diffèrent.

7. Nœud de réseau (K1, K2, K3) selon l'une des revendications précédentes, dans lequel au moins un port sur le commutateur interne (SWᵢ) au niveau de la connexion qui relie le commutateur interne (Swᵢ) au commutateur externe (Swₑ) est configuré de sorte que les paquets marqués d'un attribut réservé aux paquets qui transportent des données de la première unité de calcul (CPUₐ) à la seconde unité de calcul (CPU_{b}), ne sont pas transmis du port du commutateur interne (Swᵢ) à l'au moins un commutateur externe (Swₐ).

8. Nœud de réseau (K1, K2, K3) selon l'une des revendications précédentes, dans lequel au moins un port sur le commutateur externe (SWₐ) au niveau de la connexion qui relie le commutateur interne (Swᵢ) au commutateur externe (Swₐ) est configuré de sorte que les paquets marqués d'un attribut réservé aux paquets qui transportent des données de la première unité de calcul (CPUₐ) à la seconde unité de calcul (CPU_{b}), sont rejetés par l'au moins un commutateur externe (Swₐ).

9. Nœud de réseau (K1, K2, K3) selon l'une des revendications précédentes, dans lequel au moins un port sur le commutateur externe (Swₐ) est configuré de sorte qu'un débit de données qui est transmis au commutateur interne (Swᵢ), est limité à un débit de données prédéterminé.

10. Nœud de réseau (K1, K2, K3) selon l'une des revendications précédentes, dans lequel au moins un port sur le commutateur interne (Swᵢ) est configuré de sorte qu'en cas de dépassement d'un débit de données prédéterminé, des paquets de données sont rejetés par un port sur le commutateur externe (Swₐ).

11. Nœud de réseau (K1, K2, K3) selon la revendication 9 ou 10, dans lequel le débit de données prédéterminé dépend du temps de calcul disponible et de la taille de la mémoire tampon de sorte que l'échange de données entre la première unité de calcul (CPUₐ) et la seconde unité de calcul (CPU_{b}) n'est pas altéré.

12. Module de commande (STM) pour au moins un composant, qui présente au moins un premier nœud de réseau (K1) et au moins un deuxième nœud de réseau (K2) selon les revendications précédentes avec une interface (IF) servant à émettre des données de commande et à recevoir des données d'un composant à commander (A), dans lequel lorsqu'un nœud de réseau (K1, K2, K3) se désactive, un autre nœud (K1, K2, K3) prend en charge les tâches de ce nœud de réseau (K1, K2, K3).

13. Anneau Ethernet comportant au moins deux nœuds de réseau selon les revendications précédentes 1 à 11, lesquels forment un module de commande et un composant associé (A) à commander par le module de commande (STM).

14. Anneau Ethernet comportant trois nœuds de réseau (K1, K2, K3) selon les revendications précédentes 1 à 11, lesquels forment un module de commande (STM), deux nœuds de réseau (K1, K3) présentant une interface de communication avec le composant (A).
